# EUROPÄISCHE PATENTANMELDUNG

(11) **EP 2 011 448 A1**
(43) Veröffentlichungstag der Anmeldung: **07.01.2009**
(21) Anmeldenummer: 07012906.9
(22) Anmeldetag: 02.07.2007
(51) Int. Cl.: A61C 8/00

(54) **Gingivaformer**

(71) Anmelder: Hassink, Christoph, Dr., 41464 Neuss (DE)
(72) Erfinder: Hassink, Christoph, Dr., 41464 Neuss (DE)
(74) Vertreter: Paul, Dieter-Alfred

(57) **Zusammenfassung**

Gingivaformer (7) zur Konditionierung von Mundschleimhaut (3) in einem Implantationsbereich (4), der mit einer Grundfläche (8) auf ein im Kieferknochen (2) verankertes Implantat (5) aufsetzbar ist und eine seitliche Konditionierfläche (9) und eine Bohrung (11) aufweist. Der Gingivaformer ist mittels einer die Bohrung (11) durchsetzenden und in ein korrespondierendes Gewinde (6) im Implantat (5) einschraubbaren Befestigungsschraube (12) so am Implantat (5) fixierbar, dass die zentrale Achse (B) des Gingivaformers (7) zu der zentralen Achse (A) des Implantats (5) geneigt ist.

## Beschreibung

Die Erfindung betrifft einen Gingivaformer zur Konditionierung von Mundschleimhaut in einem Implantationsbereich, der mit einer Grundfläche aus einem Kieferknochen verankertes Implantat aufsetzbar ist und eine seitliche Konditionierfläche und eine Bohrung aufweist, wobei er mittels einer die Bohrung durchsetzenden und ein korrespondierendes Gewinde im Implantat einschraubbaren Befestigungsschraube am Implantat fixierbar ist. Weiterhin betrifft die Erfindung einen Kit für eine Zahnprothese sowie ein Verfahren zur Herstellung des Kits.

Es ist bekannt, Gingivaformer zur Konditionierung von Mundschleimhaut im Implantationsbereich zu verwenden. Derartige Gingivaformer weisen eine Grundfläche, eine seitliche Konditionierfläche und eine koaxiale Bohrung auf, die von einer Befestigungsschraube durchsetzt ist, welche wiederum in ein korrespondierendes Gewinde in einem im Kieferknochen verankerten Implantat einschraubbar ist. Über die Befestigungsschraube kann der Gingivaformer mit dem Implantat verbunden werden. Ein derartiger Gingivaformer ist beispielsweise aus der DE 202 11 019 U1 bekannt.

Aufgabe des Gingivaformers ist es, während der Einheilphase des Implantats zu verhindern, dass die Mundschleimhaut über dem Implantat zusammenwächst bzw. dafür zu sorgen, dass die Mundschleimhaut gemäß der Form einer später an dem Implantat zu befestigenden prothetischen Versorgung konditioniert wird. Als prothetische Versorgungen werden hier feste Kronen und Brücken verstanden.

In einigen Fällen, beispielsweise bei einer prothetischen Versorgung im Oberkieferfrontbereich, ist es notwendig, die prothetische Versorgung abgewinkelt mit dem Implantat zu verbinden. Um dies zu ermöglichen, sind im Stand der Technik angulierte/abgewinkelte Pfosten bekannt, über welche die prothetische Versorgung an dem Implantat so befestigt werden kann, dass die zentrale Achse der prothetischen Versorgung zu der zentralen Achse des Implantates geneigt ist.

Allerdings wird die Mundschleimhaut während des Ausheilens in diesem Fall von dem Gingivaformer derart konditioniert, dass sie nicht an diese tatsächliche Lage der prothetischen Versorgung zu dem Implantat angepasst ist. Wenn dann die prothetische Versorgung nach der Entfernung des Gingivaformers über einen angulierten Pfosten mit dem Implantat verbunden wird, kann infolge der Neigung der prothetischen Versorgung relativ zu dem Implantat die Mundschleimhaut auf einer Seite der prothetischen Versorgung eingequetscht werden. Gleichzeitig liegt die Mundschleimhaut auf der gegenüber liegenden Seite zu weit von der prothetischen Versorgung entfernt. Dies ist sowohl unter ästhetischen Aspekten als auch mit Hinblick auf die Gesundheit der Mundschleimhaut problematisch.

Aufgabe der vorliegenden Erfindung ist es, die Konditionierung der Mundschleimhaut im Implantationsbereich während der Ausheilung den prothetischen Anforderungen entsprechend zu verbessern.

Diese Aufgabe ist dadurch gelöst, dass der Gingivaformer so am Implantat fixierbar ist, dass die zentrale Achse des Gingivaformers zu der Zentralachse des Implantats geneigt ist.

Grundgedanke der Erfindung ist es also, den Gingivaformer derart auszubilden, dass er abgewinkelt an dem Implantat befestigt werden kann. In der Folge ist auch die Konditionierfläche des Gingivaformers bezüglich der zentralen Achse des Implantats geneigt.

Mit Hilfe der Erfindung wird sichergestellt, dass die Mundschleimhaut im Implantationsbereich während der Ausheilung tatsächlich in ihrer Form und Lage für die später anzubringende prothetische Versorgung konditioniert wird. Es ist möglich, dass die Befestigungsschraube mit einem Innensechskant-Schraubenkopf versehen ist und die Bohrung als Stufenbohrung ausgeführt ist. Die Stufenbohrung weist einen unteren Bereich mit geringerem Durchmesser und einem oberen Bereich mit größerem Durchmesser auf, der den innensechskant-Schraubenkopf im eingeschraubten zustand vollständig aufnimmt.

Die erfindungsgemäße Aufgabe wird ebenfalls durch einen Kit mit den Merkmalen des Anspruchs 3 und durch ein Verfahren mit den Merkmalen des Anspruchs 5 gelöst. Weitere vorteilhafte Ausgestaltungen sind in den Unteransprüchen angegeben.

Die Erfindung wird im folgenden anhand eines Ausführungsbeispiels unter Bezugnahme auf die Zeichnung näher erläutert. In der Zeichnung zeigen:
- Figur 1: eine schematische Darstellung eines Implantats, das in einem Kieferknochen eingesetzt und mit einem erfindungsgemäßen Gingivaformer verbunden ist, und
- Figur 2: das Implantat gemäß der Figur 1, bei dem der Gingivaformer entfernt worden ist, und
- Figur 3: das Implantat gemäß der Figur 2 mit daran angebrachter prothetischer Versorgung.

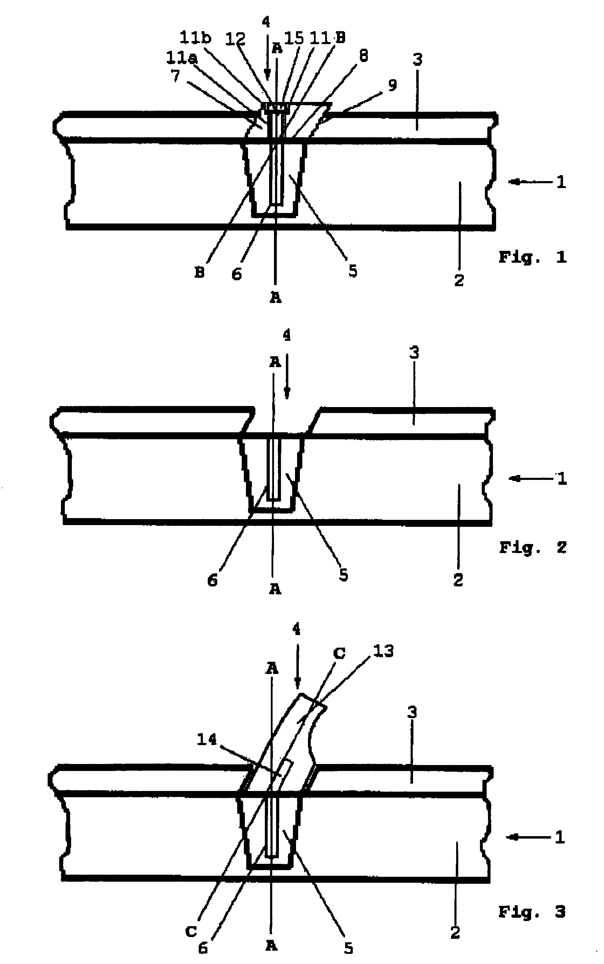

In der Figur 1 ist in schematischer Form ein Teil des Frontbereichs eines Unterkiefers 1 gezeigt. Der Unterkiefer 1 umfasst einen Kieferknochen 2 sowie eine diesen bedeckende Mundschleimhaut 3. In den Unterkieferknochen 2 ist in einem Implantationsbereich 4 ein Implantat 5 eingesetzt, das ein koaxial ausgebildetes Gewinde 6 aufweist. Auf das Implantat 5 ist ein Gingivaformer 7 mit einer Grundfläche 8 aufgesetzt, wobei der Gingivaformer 7 die Mundschleimhaut 3 oberhalb des Implantats 5 durchsetzt.

Der Gingivaformer 7 ist mit und einer Stufenbohrung 11 versehen, die in einem unteren Bereich 11a einen geringeren Durchmesser und in einem oberen Bereich 11b einen größeren Durchmesser aufweist. Die Bohrung 11 ist von einer Befestigungsschraube 12 durchsetzt, die in das Gewinde 6 des Implantats 5 eingeschraubt ist und so den Gingivaformer 7 am Implantat 5 fixiert. Die Befestigungsschraube 12 ist mit einem innensechskant-schraubenkopf 15 versehen, der vollständig in einem oberen Bereich 11b der Bohrung 11 aufgenommen ist.

Der Gingivaformer weist eine seitliche Konditionierfläche 9 auf, die hier über ihren gesamten Umfang zu der zentralen Achse A des Implantats 5 mit einem konstanten Winkel geneigt ist. Alternativ kann der Winkel der Konditionierfläche zu der zentralen Achse A des Implantats 5 auch in verschiedenen Bereichen unterschiedliche werte betragen. Es ist ebenfalls möglich, dass die Konditionierfläche unterschiedlich breite Bereiche aufweist. Obwohl die Konditionerfläche 9 hier als ebene Fläche ausgebildet ist, die überall die gleite Breite aufweist, ist es grundsätzlich auch möglich, sie bereichsweise mit einer Wölbung zu versehen. Insgesamt betrachtet sollten die Form und die räumliche Lage der Konditionierfläche 9 möglichst exakt mit der der prothetischen Versorgung 13 im Übergangsbereich zum Implantat übereinstimmen.

Die zentrale Achse B des Gingivaformers ist zu der zentralen Achse A des Implantats geneigt, d.h. die Achsen A und B schließen einen Winkel kleiner 180° ein. Ebenso ist die Konditionierfläche 9 bezüglich der zentralen Achse A des Implantates 5 geneigt.

Wenn die Mundschleimhaut 3 im Implantationsbereich 4 nach dem Aufsetzen des Gingivaformers 7 ausheilt, wird sie dabei durch die Konditionierfläche 9 konditioniert. So wird neue Mundschleimhaut 3 im Implantationsbereich 4 mit einer Form ausgebildet, die komplementär zu der der Konditionierfläche 9 ist. Dies ist in der Figur 2 dargestellt, die das Implantat 5 nach der Entfernung des Gingivaformers 7 zeigt. Hier ist erkennbar, dass die Mundschleimhaut 3 während des Ausheilens gemäß der Form der Konditionierfläche 9 nachgebildet wurde.

Anschließend wird eine prothetische Versorgung 13 über einen angulierten Pfosten 14 mit dem Implantat 5 verbunden. Dabei ist die zentrale Achse C der prothetischen Versorgung 13 zu der zentralen Achse A des Implantats 5 geneigt. Die Achsen A und C schließen einen Winkel ungleich 180° ein, der hier dem Winkel zwischen der zentralen Achse B des Gingivaformers 7 und der zentralen Achse A des Implantats 5 entspricht.

Die Mundschleimhaut 3 im Implantationsbereich 4 ist so geformt, dass sie in optimaler Weise die prothetische Versorgung 13 einfasst. So kommt es weder zu einer Quetschung der Mundschleimhaut 3 noch liegt diese in Bereichen zu weit von der prothetischen Versorgung 13 entfernt.

## Patentansprüche

1. Gingivaformer (7) zur Konditionierung von Muridschleimhaut (3) in einem Implantationsbereich (4), der mit einer Grundfläche (8) auf ein im Kieferknochen (2) verankertes Implantat (5) aufsetzbar ist und eine seitliche Konditionierfläche (9) und eine Bohrung (11) aufweist, wobei er mittels einer die Bohrung (11) durchsetzenden und in ein korrespondierendes Gewinde (6) im Implantat (5) einschraubbaren Befestigungsschraube (12) am Implantat (5) fixierbar ist, **dadurch gekennzeichnet, dass** der Gingivaformer (7) so am Implantat (5) fixierbar ist, dass die zentrale Achse (B) des Gingivaformers (7) zu der zentralen Achse (A) des Implantats (5) geneigt ist.

2. Gingivaformer (7) nach Anspruch 1, **dadurch gekennzeichnet, dass** die Befestigungsschraube (12) mit einem Innensechskant-Schraubenkopf (15) versehen ist und die Bohrung (11) als Stufenbohrung ausgeführt ist, die einen unteren Bereich (11a) mit geringerem Durchmesser und einen oberen Bereich (11b) mit größerem Durchmesser aufweist, der den Innsechskant-Schraubenkopf (15) im eingeschraubten Zustand vollständig aufnimmt.

3. Kit für eine Zahnprothese umfassend ein Implantat (5), einen Gingivaformer (7) und eine prothetische Versorgung (10), bei dem die prothetische Versorgung (10) mit dem Implantat (5) derart verbindbar ist, dass die zentrale Achse (C) der prothetischen Versorgung (13) zu der zentralen Achse (A) des Implantats (5) geneigt ist, und bei dem der Gingivaformer (7) mit einer Grundfläche (8) auf das Implantat (5) aufsetzbar ist und eine seitliche Konditionierfläche (9) sowie eine Bohrung (11) aufweist, wobei er mittels einer die Bohrung (11) durchsetzenden und in ein korrespondierendes Gewinde (6) im Implantat (5) einschraubbaren Befestigungsschraube (12) am Implantat (5) fixierbar ist, **dadurch gekennzeichnet, dass** die Kontur der Konditionierfläche (9) zumindest im Übergangsbereich zum Implantat (5) an die Neigung der zentralen Achse (C) der prothetischen Versorgung (13) zu der zentralen Achse (A) des Implantats (5) angepasst ist.

4. Kit nach Anspruch 3, **dadurch gekennzeichnet, dass** die Befestigungsschraube (12) mit einem Innensechskant-schraubenkopf (15) versehen ist und die Bohrung (11) als Stufenbohrung ausgeführt ist, die einen unteren Bereich (11a) mit geringerem Durchmesser und einem oberen Bereich (11b) mit größerem Durchmesser aufweist, der den Innensechskant-Schraubenkopf (15) im eingeschraubten Zustand vollständig aufnimmt.

5. Verfahren zur Herstellung eines Kits für eine Zahnprothese, umfassend ein Implantat (5), einen Gingivaformer (7) und eine prothetische Versorgung (13), die so ausgebildet werden, dass die prothetische Versorgung (10) mit dem Implantat (5) derart verbindbar ist, dass die zentrale Achse (C) der prothetischen Versorgung (10) zu der zentralen Achse (A) des Implantats (5) geneigt ist, und dass der Gingivaformer (7) eine Grundfläche (8), eine seitlichen Konditionierfläche (9) und einer Bohrung (11) aufweist, die mit einer Befestigungsschraube (12) durchsetzt wird, welche in ein korrespondierendes Gewinde (6) im Implantat (5) einschraubbar ist, **dadurch gekennzeichnet, dass** die Kontur der Konditionierfläche (9) zumindest im übergangsbereich zum Implantat (5) an die Neigung der zentralen Achse (C) der prothetischen Versorgung (13) zu der zentralen Achse (A) des Implantats (5) angepasst wird.

6. Verfahren nach Anspruch 5, **dadurch gekennzeichnet, dass** die Befestigungsschraube (12) mit einem Innensechskant-Schraubenkopf (15) versehen und die Bohrung (11) als Stufenbohrung ausgeführt wird, die einen unteren Bereich (11a) mit geringerem Durchmesser und einen oberen Bereich (11b) mit größerem Durchmesser aufweist, der den Innensechskant-Schraubenkopf (15) im verschraubten zustand vollständig aufnimmt.
